Europäisches Patentamt

European Patent Office

Office européen des brevets

(11) Publication number: **0 325 083**
**A1**

(12) **EUROPEAN PATENT APPLICATION**

(21) Application number: 88500117.2

(22) Date of filing: 28.11.88

(51) Int. Cl.⁴: **F22G 1/16 , F22B 31/04**

(30) Priority: 21.01.88 ES 8800146

(43) Date of publication of application:
26.07.89 Bulletin 89/30

(84) Designated Contracting States:
AT BE CH DE FR GB GR IT LI LU NL SE

(71) Applicant: SENER, INGENIERIA Y SISTEMAS,
S.A.
Avda. de Zugazarte, 56
E-48930 Las Arenas (Vizcaya)(ES)

(72) Inventor: Fuica Marquinez, Luis
Cristobal Valdés 8-2 Derecha
E-48930 Las Arenas(Guecho) Vizcaya(ES)

(74) Representative: Gomez-Acebo y Pombo, José
Miguel
c/o CLARKE, MODET & Co. Paseo de la
Castellana 164
E-28046 Madrid(ES)

(54) System for the production of water vapour with high pressure and temperature levels.

(57) System for the production of water vapour with high pressure and temperature levels, by means of which the restrictions which exist in respect of current designs of boiler using, either totally or in part, problematic fuels, are overcome.

The system detailed in this invention is distinguished by the fact that it comprises a first phase of water heating, by means of a boiler fed with low quality fuel and/or fuel with a high problem of corrosion at high temperatures, the temperature of the vapour obtained being increased during a second heating phase, by means of a superheating-reheating installation (1) fed with traditional fuels.

FIG.1

# SYSTEM FOR THE PRODUCTION OF WATER VAPOUR WITH HIGH PRESSURE AND TEMPERATURE LEVELS

This invention refers to a system for the production of water vapour with high pressure and temperature levels, by means of which it is possible to overcome the pressure and temperature restrictions which exist with current designs of boilers whilst burning, whether totally or in the most part, problematic fuels.

Since the petrol crisis, interest in using fuels which up until then had proved to be problematic intensified, as is the case with low quality fossil fuels, the biomass, industrial and domestic waste, etc. This type of fuel began to be used in boilers for the production of vapour for use in the obtention of, for example, electric power.

However, in many cases the traditional design of boiler, when using fuels which are totally or in the most part of the type mentioned above, i.e. problematic, present restrictions with regard to the characteristics of the vapour generated, these restrictions being mainly in the pressure and temperature levels. These restrictions are due, amongst other possible causes, to the fact that during the combustion process the mentioned problematic fuels produce gases which prove to be corrosive to the parts or elements of the installation which come into contact with the combustion gases. The problem of corrosion is greater the higher the temperature, to the extent that it is necessary to restrict the temperature within the boilers to a level whereby the degree of corrosion is acceptable in order to ensure a minimum life or duration of the installation's components which are subjected to the effect of the corrosive gases. These considerations, which can be generally applied to all the components of the mentioned boilers, are more critical in the superheating unit, this being the component of the boiler with the highest temperature level. This situation has traditionally meant that the vapour's pressure and temperature levels are selected in a compromise between the output of the installation versus profitability, operating/maintenance costs, etc., and this has not eliminated the problem of corrosion in the superheating units mentioned above, which makes it necessary to replace these at more frequent intervals than is usual in vapour generating installations, using traditional fuels, such as derivates of petrol, natural gas, coal, etc.

All of the above means that the output achieved by the generatng installation as a whole is relatively low, since the pressure and temperature characteristics of the vapour are conditional on the global output of the power station using the vapour, for example, an electric power generating station.

The aim of this invention is to develop a system for the production of water vapour with high pressure and temperature levels, whereby part of the heating process is carried out by the use of those fuels of the type known as problematic, eliminating the above mentioned problems which make it necessary to introduce restrictions with regard to the characteristics of the vapour obtained.

According to this invention aimed at obtaining water vapour with a high temperature level, the first phase of generating the vapour is by using a boiler fed exclusively or in the most part by low quality fuels and/or fuels where there is a serious problem of corrosion at high temperatures, these fuels being of the type called problematic above. In this first stage of the heating process a saturated or slightly superheated vapour is obtained, with pressure and temperature characteristics whereby the temperature restrictions aimed at avoiding problematic situation and an undesirable degree of corrosion of the elements of the boiler are not surpassed. In this new situation the vapour produced has a higher pressure level than is usual in this type of installation whilst remaining compatible with the boiler. In addition, whilst generating the saturated or slightly superheated vapour, the superheating unit is either omitted or the temperature within this is notably lower than that of conventional installations, by warrant of which the operative problems mentioned above are overcome. On the other hand, the characteristics of the vapour produced are such that they allow for qualitative improvements for it to be used in the generation of electric power, or for uses where it is necessary for the vapour to have pressure and/or temperature levels which are higher than those normally generated in boilers burning those fuels known as problematic.

The qualitative improvement of the vapour obtained during the first phase of the heating process is achieved during a second heating phase or process in which the temperature is increased to the desired level, for which a separate superheating-reheating installation is used, this being fed by traditional fuels, the use of which means that the necessary temperature of the vapour can be achieved.

The two phases indicated are carried out by means of installations or boilers which are adequate for the type of fuel which being used. In the second phase it is possible to superheat and, if need be, reheat the vapour, as many times as is necessary for the thermal cycle of the plant for which the vapour is destined. During the second phase, as indicated above, a non-problematic fuel will be used, for example natural gas (or combustion gases originating in another installation), fuel oil, coal, etc. The burner and/or grills, bundles of superheating and reheating units, etc. will be very flexible during this second phase to enable them to be adjusted in each case to the most appropriate technical and financial solution.

Before the combustive air used in the separate superheating-reheating installation enters the combustion chamber, it can be heated in a heat-exchange unit, taking advantage of some thermal power of the hot smoke, before being evacuated through the chimney.

In addition, a recirculation process can be made available for the gases in order to regulate the temperature of these within the installation, and this process can vary depending on the installation used to make it compatible to its design and mode of operation.

The following advantages can be obtained by using the system detailed in this invention:

a) The practical restrictions which currently exist during the generation of vapour with high pressure and temperature levels can be overcome, whilst burning fuels of the type known as problematic.

b) On overcoming the restrictions which have existed up to now when using fuels of the type known as problematic, a high enthalpy vapour can be obtained, which will allow for improved exploitation of its power, for example in the generation of electric power, with a higher thermal output.

c) To achieve both qualitative and quantitative advantages in respect of the problematic fuel consumed in the boiler during the first heating phase, with the new system detailed in this invention greater electric power is generated than with the traditional system, consuming an additional quantity of fuel which enables for a much higher than usual output to be obtained in thermoelectricity generating stations.

d) A reduction in the cost of the electric power generated is achieved.

e) In addition, during the first phase the boiler functions in conditions which make for a great improvement in its operational capacity and thereby greater reliability and profitability together with a reduction in operating and maintenance costs.

The attached diagram shows a vapour superheating-reheating installation used for carrying out the second phase of the process.

In this diagram, reference no. 1 indicates a heating unit provided with a series of burners (2), fed through a ducting (3), by, for example, natural gas, gas oil, fuel oil, coal, etc. Unit 1 includes an superheating unit (4), through which water vapour originating from the first phase of the heating process circulates, i.e. the vapour obtained in a boiler in which fuels of the type known as problematic are used. The vapour orginating from the first phase of the heating process passes through an entrance (5) of the superheating unit, water vapour with a higher temperature level being obtained at the exit (6) of this unit. Unit 1 can also include vapour reheating units (7) and, if necessary, these can have a second series of burners (9) fed with fuel from the same supply ducting (3).

The combustion air in unit 1 can be supplied directly to the combustion areas by means of a ventilator (10) and, in addition, the temperature level of this can be increased by means of an air heater (11), by thermal interchange with the combustion gases taken from the exit (12) of the boiler. These combustion gases, after having passed through the heater (11) are directed to the chimney (13).

Some of the combustion gases can be recirculated, by means of the ventilation unit (16), through ducting (14), at the entrance (15).

The vapour superheating-reheating installation will be provided with regulation and control systems which have an appropriate relation to those of the boiler during the first phase of the heating process, as well as those of the installation using the vapour produced.

It is considered that the nature of the invention has been sufficiently described, as has the manner of carrying this out in practice. It must be stressed that the clauses indicated above and represented in the attached diagram are subject to detail changes whenever this does not alter the fundamental principle.

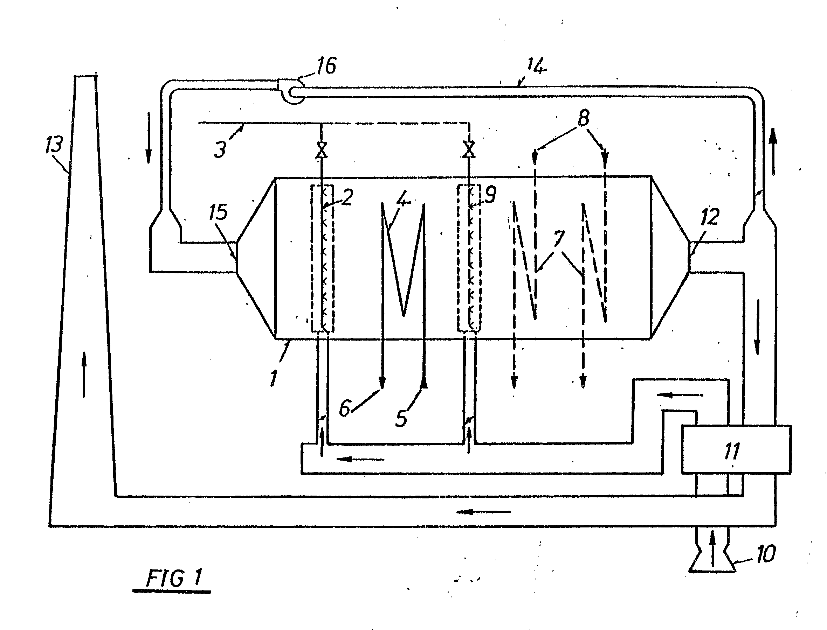

## Claims

1.- System for the production of water vapour with high pressure and temperature levels, distinguished by the fact that it comprises a first phase of water heating, by means of a boiler fed with low quality fuel and/or fuel with a high problem of corrosion at high temperatures, thereby obtaining a vapour with a high pressure level and a temperature lower than that which would corrode the elements of the boiler. The temperature of this vapour is increased during a second phase of heating, by means of a superheating-reheating installation fed with traditional fuels, these being preferably gaseous or in liquid form.

FIG 1

EP 0 325 083 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 884 193 (BRYERS)<br>* Whole document * | 1 | F 22 G 1/16<br>F 22 B 31/04 |
| X | DE-A-3 330 122 (HÖLTER)<br>* Whole document * | 1 | |
| X | BE-A- 459 514 (BBC)<br>* Whole document * | 1 | |
| X | CH-A- 375 024 (VON ROLL)<br>* Page 1, line 71 - page 2, line 95; figures * | 1 | |
| A | DE-A-1 426 890 (AEG-KANIS)<br>* Page 8, line 28 - page 9, line 24; figures * | 1 | |
| E,X | EP-A-0 299 555 (PROMETHEUS)<br>* Abstract; figures * | 1 | |
| A | FR-A-1 364 535 (SIEMENS) | | TECHNICAL FIELDS SEARCHED (Int. Cl.4) |
| A | US-A-4 686 832 (MILIARAS) | | F 22 G<br>F 22 B<br>F 01 K |

The present search report has been drawn up for all claims

| Place of search | Date of completion of the search | Examiner |
|---|---|---|
| THE HAGUE | 24-04-1989 | VAN GHEEL J.U.M. |